# EUROPÄISCHE PATENTSCHRIFT

(11) **EP 0 486 607 B1**
(45) Veröffentlichungstag und Bekanntmachung des Hinweises auf die Patenterteilung: **21.12.1994**
(21) Anmeldenummer: 90913136.9
(22) Anmeldetag: 10.08.1990
(51) Int. Cl.: H04N 7/00

(54) **VERFAHREN ZUM ÜBERTRAGEN SOWIE ZUM AUTOMATISCHEN EMPFANGEN VON DATENSIGNALEN IN EINEM FERNSEHSIGNAL**
PROCESS FOR TRANSMISSION AND AUTOMATIC RECEPTION OF DATA SIGNALS IN A TV SIGNAL
PROCEDE POUR LA TRANSMISSION AINSI QUE LA RECEPTION AUTOMATIQUE DE SIGNAUX DE DONNEES DANS UN SIGNAL DE TELEVISION

(30) Priorität: 12.08.1989 DE 3926685
(43) Veröffentlichungstag der Anmeldung: 27.05.1992
(73) Patentinhaber: Thomson Consumer Electronics Sales GmbH, 30453 Hannover (DE)
(72) Erfinder: HOFMANN, Günter, D-5000 Köln 30 (DE); OBERLIES, Karl-Ulrich, D-5600 Wuppertal 11 (DE); NEUMANN, Adreas, D-5000 Köln 60 (DE); SCHADWINKEL, Eckhard, D-5000 Köln 80 (DE)
(86) Internationale Anmeldenummer: EP9001323
(87) Internationale Veröffentlichungsnummer: WO9103127

(56) Entgegenhaltungen:
- EP-A- 0 026 708
- US-A- 4 317 132
- CONFERENCE PROCEEDINGS, Institute of Electronic & Radio Engineers London, Band 69, September 1986, J.P.Chambers et al.: "BBC datacast - the transmission system, D.J. Bradshaw et al.: "BBC datacast - conditional access operation", Seiten 93 - 99
- TELEVISION, Band 18, Nr. 5, September-Oktober, 1980, (London, GB) J.B. Chambers: "Potential of extended teletext", Seiten 43-45
- RUNDFUNKTECHNISCHE MITTEILUNGEN, Band 28, Nr. 6, November-Dezember 1984, (Norderstedt, DE), G. Eitz: "Kombinierer für Vidiotextsignale", Seiten 273-289
- REVUE RADIODIFFUSION-TELEVISION, Nr. 64, 1980, J. Blineau, et al.: "Mesure en diffusion de données et principaux resultats obtenus lors de campagnes de mesure", Seiten 31-39

## Beschreibung

Die Erfindung bezieht sich auf ein Übertragungsverfahren gemäß dem Oberbegriff des Patentanspruchs 1 sowie auf ein Empfangsverfahren gemäß dem Oberbegriff des Patentanspruchs 2. Verfahren dieser Art sind aus dem Forschungsbericht BBC RD 1988/1 vom März 1988 der British broadcasting Corporation und aus dem Artikel "BBC - datacast - The transmission system", erschienen in Conference Proceedings of the Institute of Electronic & Radio Engineers London, Band 69, Seiten 93 bis 98, September 1986 bekannt.

Zur Übertragung von Datensignalen in einem Fernsehsignal ist in der U.K. Teletext-Spezifikation vorgesehen (vgl. BBC Research Report BBC European 1988/1), asynchron zu einem Teletextzyklus eine besonders gekennzeichnete Teletextzeile zu verwenden. Bei dieser Teletextzeile handelt es sich um eine sogenannte "Pseudoreihe", die von Teletext-Dekodern des sogenannten "Level 1" des Teletext-Standards WST (world system teletext) nicht ausgewertet wird. In den Pseudoreihen werden in den Ausbaustufen "Level 2" und "Level 3" des WST-Standards Ergänzungsdaten bezüglich des eingeschränkten Grundzeichensatzes von "Level 1" übertragen, um Sonderzeichen, Feinstrukturen oder Farbschattierungen darzustellen. Im Falle einer davon unabhängigen Datensignalübertragung können insbesondere Softwaredaten zur Fernprogrammierung von Personalcomputern übertragen werden ("Tele-Software").

Die in der Bundesrepublik Deutschland und Berlin(West) von ARD und ZDF verwendeten Videotextsende- und -verteileinrichtungen sind ebensowenig wie die derzeit auf dem deutschen Markt vertriebenen Videotext-Empfänger in der Lage, Pseudoreihen, insbesondere, wenn sie unabhängig von der Videotext-Seitenstruktur in den Videotext-Zyklus eingefügt sind, zu übertragen bzw. auszuwerten. Dementsprechend wurde in der Fernsehtext-Spezifikation von ARD/ZDF/DBP die UK-Teletext vorgesehene Übertragung von Datensignalen nicht übernommen.

Die Aufgabe der Erfindung besteht darin, eine mit der Fernsehtext-Spezifikation von ARD/ZDF/DBP kompatible Übertragung von Datensignalen in einem Fernsehsignal anzugeben. Ferner wird angestrebt, bei einer derartigen kompatiblen Datensignalübertragung eine besonders einfache, automatisierte Möglichkeit zum Empfang und zur Auswertung der Datensignale zu schaffen.

Diese Aufgabe wird hinsichtlich der Übertragung von Datensignalen durch die kennzeichnenden Merkmale des Patentanspruchs 1 gelöst. Hinsichtlich des Empfangs solcher übertragenen Datensignale wird die Aufgabe durch die kennzeichnenden Merkmale des nebengeordneten Patentanspruchs 2 gelöst.

Die Erfindung wird anhand der Zeichnungen näher erläutert. Es zeigt:
- Fig. 1: eine schematische Darstellung einer nach dem erfindungsgemäßen Verfahren übertragenen und empfangenen Videotext-Sonderseite;
- Fig. 2: ein Blockschaltbild eines Ausführungsbeispiels für den sender- und empfängerseitigen Schaltungsaufbau zur Durchführung des erfindungsgemäßen Verfahrens, und
- Fig. 3: ein Blockschaltbild für den in Fig. 2 nur als Schaltungsblock angedeuteten Empfängerteil.

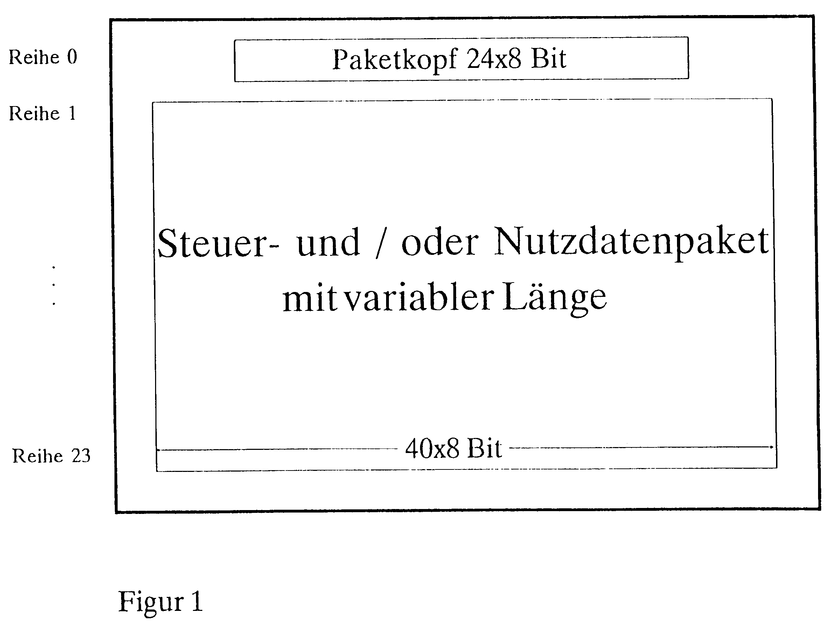

Die in Fig. 1 schematisch aargestellte Videotext-Sonderseite wird im Videotextzyklus nicht-zyklisch übertragen und besteht aus einem Paket von Datensignalen. Die Paketlänge ist dabei variabel, um eine Anpassung an die jeweilige Anwendungsform zu gewährleisten. Zweckmäßigerweise wird die Länge der Datenpakete auf die Anzahl der in jedem Fernsehhalbbild verfügbaren Zeilen abgestimmt. Dies brauchen nicht notwendigerweise stets Zeilen in der vertikalen Austastlücke (Bildrücklauf) sein, obwohl diese Anwendungsform die häufigste ist. Falls nämlich kein Bildanteil im Fernsehsignal übertargen wird, stehen praktisch sämtliche Zeilen jedes Halbbildes für die Übertragung der Datensignale zur Verfügung.

Wie Fig. 1 zeigt,besteht jede Videotext-Sonderseite aus einem Paketkopf von beispeilsweise 24x8 Bit sowie aus einem Steuer- und/oder Nutzdatenpaket von beispielsweise 40x8 Bit. Der Paketkopf befindet sich in der ersten Reihe #0 der Videotext-Sondernseite, während sich die Steuerund/oder Nutzdaten auf die Reihen #1 bis #23 der Videotext-Sonderseite aufteilen.

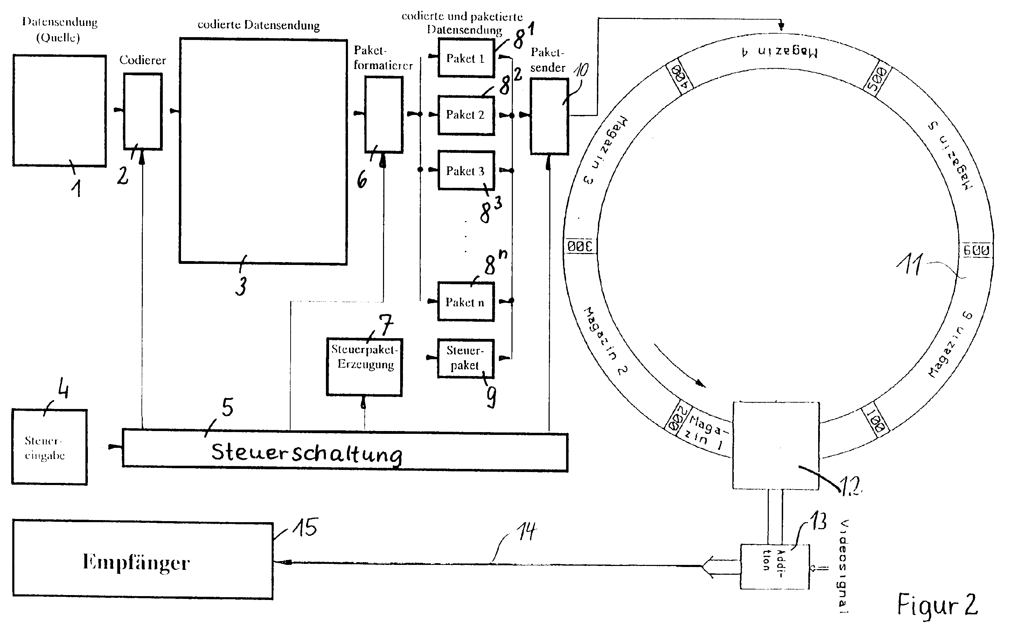

Bei dem schematischen Schaltbild der sende- und empfangsseitigen Einrichtungen zur Durchführung des Verfahrens nach Fig. 2 werden sendeseitig die Nutzdaten in einer Datenquelle 1 erzeugt und als "Datensendung" an einen Codierer 2 übergeben, welcher die Nutzdaten im Videotextcode codiert. Die als gesonderter Block 3 dargestellte codierte Datensendung wird in dem Paketformatierer 6 zu einem Nutzdatenpaket geformt.

Die Codierung und die Paketbildung in den Blöcken 2 und 6 erfolgt unter der Steuerung einer Steuerschaltung 5, welche die von einer Steuereingabe 4 kommenden Vorgaben bezüglich des Datenformats der Datenpakete in entsprechende Steuerinformationen für die Blöcke 2 und 6 umsetzt.

Die von dem Paketformatierer 6 erzeugten n Nutzdatenpakete sind in Fig. 2 als Blöcke 8¹ bis 8ⁿ veranschaulicht. Zu diesen Nutzdatenpaketen kommt - wie aus Fig. 1 ersichtlich ist, ein Steuerdatenpaket hinzu, das in Fig. 2 als Block 9 veranschaulicht ist und von einem Steuerpaketgenerator 7 unter der Steuerung der Steuerschaltung 5 erzeugt wird. Die Nutzdatenpakete 8¹ bis 8ⁿ und das Steuerdatenpaket 9 werden von dem Paketsender 10 als Videotext-Sonderseite gemäß Fig. 1 einem Videotextrechner 12 zugeführt. Dabei enthalten die Pakete 8¹ nis 8ⁿ und 9 den Paketkopf und Steuer- und Nutzdaten in dem gewünschten Format nach Fig. 1.

Der vom Paketsender 10 ausgehende nicht-zyklische Datenstrom wird von dem Videotextrechner 12 mit dem als Ringmagazin 11 angedeuteten zyklischen Datenstrom der "normalen" Videotextseiten gemischt, d.h., als Sonderseite zwischen zwei "normale" Videotextseiten eingefügt. Der Videotextrechner 12 führt die Videotextdaten (welche nunmehr die erfindungsgemäße Sonderseite enthalten) in üblicher Weise einer Addierstufe 13 zu. welche die Videotextdaten in ein Videosignal fernsehnormgerecht einfügt, z.B. in die hierfür vorgesehenen Zeilen in der vertikalen Austastlücke jedes Halbbildes.

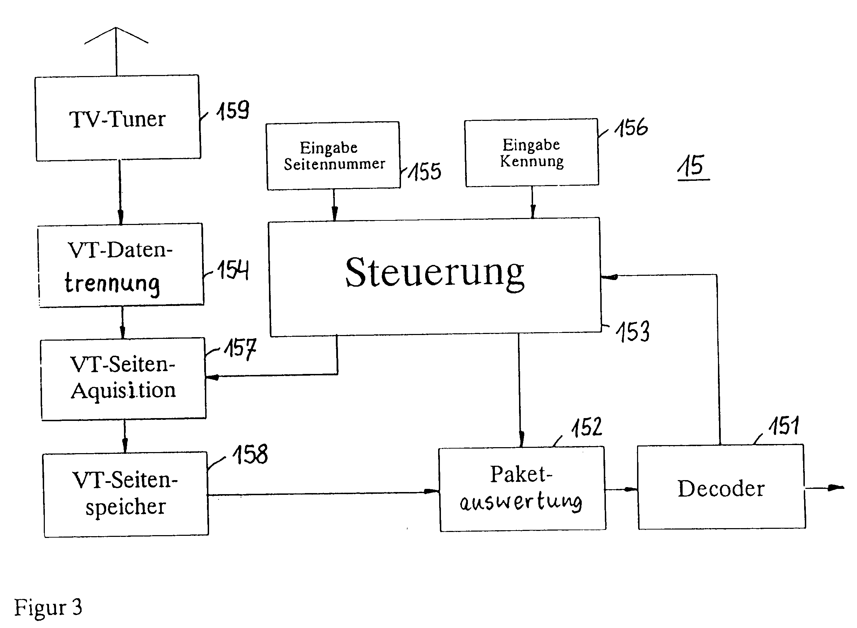

Über den schematisch als Leitung angedeuteten Übertragungsweg 14 (breitbandige Kabelverbindung, Lichtwellenleiterverbindung, terrestrische Rundfunkstrecke, Satelliten-Rundfunkstrecke) gelangt das Videosignal mit den eingefügten Videotextdaten einschließlich erfindungsgemäßer Videotext-Sonderseite zu dem Empfänger 15, welcher in Fig. 3 im einzelnen gezeigt ist.

Der in Fig. 3 gezeigte TV-Tuner 159 des Empfängers 15 wandelt das z.B. hochfrequent übertragene Video/Videotext-Signal in ein Basisbandsignal um, von dem in einer Videotext-Datentrennstufe 154 der Videotextanteil abgetrennt wird. Der empfangene Videotext-Datenstrom am Ausgang der Datentrennstufe 154 wird laufend durch eine Videotext-Seiten-Aquisitionsstufe 157 auf das Auftreten der empfangsseitig vorprogrammierten Videotext-Sonderseiten-Nummer abgesucht. Diese Vorprogrammierung erfolgt über eine Seitennummern-Eingabe 155, welche mit einer Steuerschaltung 153 verbunden ist, die wiederum die Aquisitionsstufe 157 steuert. Bei Auftreten der gesuchten Videotext-Sonderseiten-Nummer im empfangenen Videotext-Datenstrom wird die Sonderseite decodiert und in dem Videotext-Seitenspeicher 158 zwischengespeichert.

Die zwischengespeicherte Videotext-Sonderseite wird unter der Steuerung der Steuerschaltung 153 in einer Auswertestufe 152 dahingehend untersucht, ob darin ein zur empfangsseitigen Steuerung vorgesehenes Steuerdaten-Paket enthalten ist und bejahendenfalls, ob dessen Datensendungskennung mit einer empfangsseitig vorprogrammierten Kennung übereinstimmt. Diese letztgenannte Vorprogrammierung erfolgt über eine Kennungseingabe 156, die mit der Steuerschaltung 153 verbunden ist.

Bei Übereinstimmung der Kennungen wird die zwischengespeicherte Videotext-Sonderseite und gegebenenfalls alle anschließend unter derselben Videotext-Sonderseiten-Nummer empfangenen Videotext-Sonderseiten in der Auswertestufe verarbeitet und in dem nachgeschalteten Decoder 151 decodiert. Das resultierende Datensignal entspricht der Datensendung am Ausgang der Datenquelle 1 (Fig. 2). Dieses Datensignal kann z.B. auf einem Personalcomputer abgespeichert und weiterverarbeitet werden.

## Patentansprüche

1. Verfahren zum übertragen von Datensignalen in einem Fernsehsignal - insbesondere innerhalb eines Videotext-Datenstroms - bei dem die Datensignale als Videotext-Sonderseiten paketweise übertragen werden, **dadurch** **gekennzeichnet**, daß die variable Länge der nicht-zyklisch übertragenen Datenpakete auf die Anzahl der für die übertragung verfügbaren Zeilen je Fernsehhalbbild abgestimmt wird und daß jede Videotext-Sonderseite aus einem Paketkopf sowie einem Steuer- und/oder Nutzdatenpaket besteht, wobei der Paketkopf in der ersten Reihe und die Steuer- und/oder Nutzdaten in den restlichen Reihen der Videotext-Sonderseite übertragen wird.

2. Verfahren zum automatischen Empfangen der nach dem Verfahren gemäß Anspruch 1 übertragenen Datensignale, **dadurch gekennzeichnet**, daß
a) der empfangene Videotext-Datenstrom laufend auf das Auftreten einer empfangsseitig vorprogrammierten Videotext-Sonderseitenummer abgesucht wird;
b) bei Auftreten der gesuchten Videotext-Sonderseitennummer im Videotext-Datenstrom die gesuchte Videotext-Sonderseite dekodiert und zwischengespeichert wird;
c) der Dateninhalt der zwischengespeicherten Videotext-Sonderseite dahingehend untersucht wird, ob darin ein zur empfangsseitigen Steuerung vorgesehenes Steuer-Datenpaket enthalten ist, dessen Datensendungskennung ggf. mit einer empfangsseitig vorprogrammierten Kennung auf Übereinstimmung verglichen wird, und
d) bei Übereinstimmung die Datensignale der zwischengespeicherten Videotext-Sonderseite und ggf. alle anschließend unter derselben Videotext-Sonderseitennummer empfangenen Videotext-Sonderseiten empfangsseitig verarbeitet werden.

3. Verfahren nach Anspruch 2, **dadurch gekennzeichnet,** daß zur empfangsseitigen Vorprogrammierung innerhalb des Videotext-Datenstroms Übersichtsseiten für künftige Datensendungen vorgesehen sind, wobei die einzelnen Datensendungen durch unterschiedliche, zugehörige Videotext-Sonderseitennummern und Datensendungskennungen markiert sind und daß bei Anwahl der benutzerseitig gewünschten Datensendungen die zugehörigen Videotext-Sonderseitenummern und Datensendungskennungen aus der betreffenden Übersichtsseite in den Empfänger übernommen und dort gespeichert werden.

4. Verfahren nach Anspruch 2 oder 3, **dadurch gekennzeichnet,** daß innerhalb jedes Steuer-Datenpaketes eine Codekennung zur empfangsseitigen Identifikation des senderseitig benutzten Codes für die Datennutzsignale enthalten ist, welche bei Vorliegen einer Teilnehmerberechtigung die empfangsseitige Dekodierung der Datennutzsignale steuert.

5. Verfahren nach einem der Ansprüche 2 bis 4, **dadurch gekennzeichnet,** daß die Sendungsbestände von Datensendungsarchiven, deren Kennungen öffentlich angekündigt sind, über einen vom Benutzer zur Sendeanstalt schaltbaren Rückkanal abrufbar sind, wobei die abgerufenen Datensendungen zu gegebener Zeit übertragen und von dem abrufenden Teilnehmer automatisch mit Hilfe der Vorprogrammierung der betreffenden Videotext-Sonderseitennummern und Datensendungskennungen empfangen werden.

## Claims

1. A method of transmitting data signals in a television signal - particularly within a videotext datastream - wherein the data signals are transmitted in packets as special videotext pages, characterised in that the variable length of the non-cyclically transmitted data packets is adjusted to the number of lines available for transmission per video field, and that each special videotext page comprises a packet head and a control and/or user data packet, the packet head being transmitted in the first row and the control and/or user data in the remaining rows of the special videotext page.

2. A method of automatically receiving the data signals transmitted by the method of claim 1, characterised in that
a) the videotext datastream received is constantly searched for the appearance of a special videotext page number pre-programmed at the receiver;
b) on the appearance of the special videotext page number which is being searched for in the videotext datastream, the special videotext page which is being searched for is decoded and stored temporarily;
c) the data content of the temporarily stored special videotext page is examined as to whether it contains a control data packet intended for control at the receiver, the data transmission identifier of that packet in that case being compared for matching with an identifier pre-programmed at the receiver, and
d) if they match, the data signals of the temporarily stored special videotext page, and possibly all special videotext pages subsequently received under the same special videotext
page number, are processed at the receiver.

3. A method according to claim 2, characterised in that review pages for future data transmissions are provided for pre-programming at the receiver within the videotext datastream, the individual data transmissions being marked with different, associated special videotext page numbers and data transmission identifiers, and that on selection of the data transmissions desired by the user the associated special videotext page numbers and data transmission identifiers are taken from the relevant review page into the receiver and stored there.

4. A method according to claim 2 or 3, characterised in that each control data packet contains a code identifier for identification at the receiver of the code used for the data user signals at the transmitter, which identifier controls decoding of data user signals at the receiver if a subscriber authorisation is present.

5. A method according to any of claims 2 to 4, characterised in that the transmission repertoire of data transmission archives where the identifiers are publicly advertised may be called up through a return channel which may be switched to the transmitting institution by the user, the data transmissions called up being transmitted in due course and automatically received by the subscriber who called them up, through the pre-programming of the relevant special videotext page numbers and data transmission identifiers.

## Revendications

1. Procédé de transmission de signaux de données dans un signal télévisé - notamment à l'intérieur d'un flux de données vidéotex - où les signaux de données sont transmis par paquets en tant que pages spéciales vidéotex, **caractérisé en ce que** la longueur variable des paquets de données transmises non cycliques est adaptée au nombre des lignes disponibles pour la transmission par trame télévisée et que chaque page spéciale vidéotex est composée d'un en-tête de paquet ainsi que d'un paquet de données de commande et/ou de données utiles, l'en-tête de paquet étant transmis dans la première ligne et les données de commande et/ou les données utiles étant transmises dans les lignes restantes de la page spéciale vidéotex.

2. Procédé de réception automatique des signaux de données transmis selon le procédé conformément à la revendication 1, **caractérisé en ce que**
a) le flux de données vidéotex reçu est balayé en continu pour rechercher l'apparition d'un numéro de page spéciale vidéotex préprogrammée côté réception;
b) en cas d'apparition du numéro de page spéciale vidéotex recherché dans le flux de données vidéotex, la page spéciale vidéotex est décodée et mémorisée dans une mémoire intermédiaire;
c) le contenu des données de la page spéciale vidéotex se trouvant dans la mémoire intermédiaire est analysé pour savoir s'il contient un paquet de données de commande prévu pour la commande côté réception, dont l'identification d'émission de données est comparée, le cas échéant, à une identification préprogrammée côté réception, et
d) en cas de concordance, les signaux de données de la page spéciale vidéotex se trouvant dans la mémoire intermédiaire et, le cas échéant, toutes les pages spéciales vidéotex ensuite reçues sous le même numéro de page spéciale vidéotex, sont traités.

3. Procédé selon revendication 2,
**caractérisé en ce que,** pour la préprogrammation côté réception à l'intérieur du flux de données vidéotex, des pages synoptiques sont prévues pour les futures émissions de données, les émissions de données individuelles étant marquées par des numéros de page spéciale vidéotex différents associés et des identifications d'émission de données, et que, lors de la sélection des émissions de données souhaitées par l'utilisateur, les numéros de page spéciale vidéotex afférents et les identifications d'émission de données du côté synoptique concerné sont repris dans les récepteurs et y sont mémorisés.

4. Procédé selon revendication 2 ou 3,
**caractérisé en ce que**, à l'intérieur de chaque paquet de données de commande, une identification par code est contenue afin d'identifier le code utilisé par l'utilisateur pour les signaux utiles de données, identification qui pilote le décodage des signaux utiles de données côté réception, lorsque le participant y est autorisé.

5. Procédé selon l'une des revendications 2 à 4,
**caractérisé en ce que** les inventaires d'émissions d'archives d'émission de données dont les identifications sont annoncées publiquement, peuvent être appelés via un canal de retour commutable depuis l'utilisateur vers la station d'émission, les émissions de données appelées étant transmises en temps utile et reçues automatiquement par l'usager appelant à l'aide de la préprogrammation des numéros de page spéciale vidéotex concernés et d'identifications d'émissions de données.
